# EUROPÄISCHE PATENTANMELDUNG

(11) **EP 1 462 305 A2**
(43) Veröffentlichungstag der Anmeldung: **29.09.2004**
(21) Anmeldenummer: 04005923.0
(22) Anmeldetag: 12.03.2004
(51) Int. Cl.: B60N 3/10

(54) **Halter für einen Getränkebehälter**

(30) Priorität: 22.03.2003 DE 10312931
(71) Anmelder: fischer automotive systems GmbH, 72160 Horb a.N. (DE)
(72) Erfinder: Leopold, Gunter, 72270 Baiersbronn (DE)

(57) **Zusammenfassung**

Die Erfindung betrifft einen Halter (1) mit einer topfförmigen Behälteraufnahme (3) für einen Getränkebehälter (2) und einer eine Federung (11) aufweisenden Klemmeinrichtung (12) mit radial wegdrückbaren und in die Behälteraufnahme (3) hineinragenden Haltebacken (4). Um einen derartigen Halter (1) zu schaffen, der einerseits beim Einstellen und in der Ruhelage des Getränkebehälters (2) nur geringe Kräfte ausübt und andererseits sicheren Halt gegen Verkippen gewährleistet, schlägt die Erfindung vor, dass die Haltebacken (4) über ein Koppelelement (7) miteinander gekoppelt sind, wobei das Koppelelement (7) in Einstellrichtung des Getränkebehälters (2) in wenigstens einer Linearführung (8) verschiebbar gelagert ist (Figur 1).

## Beschreibung

Die Erfindung betrifft einen Halter für einen Getränkebehälter mit den Merkmalen des Oberbegriffs des Anspruchs 1.

Aus dem Stand der Technik sind eine Vielzahl derartiger Halter mit einer topfförmigen Behälteraufnahme für Tassen, Becher, Getränkedosen, Flaschen oder dgl. bekannt, die vor allem in Kraftfahrzeugen Verwendung finden. Die bekannten Halter weisen ein oder mehrere, zum Teil über den Umfang verteilt angeordnete Haltebacken oder dgl. auf. Diese ragen in das Innere der topfförmigen Behälteraufnahme hinein und weisen schräge und/oder gerundete Gleitflächen auf. Aufgrund einer Federung können die Haltebacken von der Umfangsfläche eines Getränkebehälters radial weggedrückt werden und geben durch Klemmung dem Getränkebehälter Halt. Ein derartiger Halter ist beispielsweise in DE 296 06 583 beschrieben. Die entsprechende Klemmeinrichtung weist Haltebacken auf, die jeweils einzeln mit einem Schwenk- und Linearlager am Getränkehalter befestigt sind. Als Federelement wird ein elastischer Kreisring oder ein Band vorgeschlagen, das die Behälteraufnahme umgreift. Bekannt sind außerdem Klemmeinrichtungen, deren Federung durch je ein Federelement pro Haltebacke realisiert wird.

Wird bei einem derartigen, in ein Kraftfahrzeug eingebauten Halter das Kraftfahrzeug stark gebremst, so werden einzelne Haltebacken durch den Getränkebehälter mit hohen Kräften beaufschlagt, während andere Haltebacken stark entlastet werden. Die Federung muss daher bei den bekannten Haltern so abgestimmt sein, dass einzelne Haltebacken ein Verkippen des Getränkebehälters verhindern können. Die entsprechend hohen Federkräfte wirken aber nicht nur beim Bremsen, Beschleunigen oder bei Kurvenfahrt, sondern auch beim Einstellen und in der Ruhelage des Getränkebehälters. Gerade bei dünnwandigen Bechern oder Flaschen kann dies dazu führen, dass die Getränkebehälter durch die Haltebacken eingedrückt werden. Außerdem sind die Getränkebehälter nur schwer in den Halter einstellbar.

Der Erfindung liegt daher die Aufgabe zugrunde, einen Halter für einen Getränkebehälter zu schaffen, der einerseits beim Einstellen und in der Ruhelage des Getränkebehälters nur geringe Kräfte ausübt und andererseits sicheren Halt gegen Verkippen gewährleistet.

Diese Aufgabe wird erfindungsgemäß durch die Merkmale des Anspruchs 1 gelöst. Der Halter weist ein Koppelelement auf, das die Haltebacken miteinander koppelt. Das Koppelelement ist in Einstellrichtung des Getränkebehälters verschiebbar durch wenigstens eine Linearführung gelagert. Wird ein Getränkebehälter in die Behälteraufnahme eingestellt, so werden alle Haltebacken radial nach außen gedrückt. Gleichzeitig wird hierdurch der Ring in Einstellrichtung des Getränkebehälters gedrückt. Sämtliche Federelemente der Federung, seien sie direkt an jeder Haltebacke oder am Haltering angeordnet, werden hierbei entgegen der Federwirkung belastet. Dabei sind die einzelnen Federn relativ schwach ausgelegt, so dass die auf den Getränkebehälter wirkenden Kräfte gering sind. Dies gilt auch für den ruhenden Einstellzustand. Wird dagegen eine einzelne Haltebacke durch fahrzeugbedingte Trägheitskräfte gedrückt, so wirken aufgrund des Koppelelements sehr hohe Gegenkräfte, die ein Kippen des Halteelements verhindern. Dabei sind verschiedene Wirkmechanismen im Detail zu unterscheiden. Sind alle Federelemente am Koppelelement angeordnet und wirken auf dieses, so hat das radiale Auslenken einer einzelnen Haltebacke zur Folge, dass des Koppelelement nach unten gegen alle Federelemente gedrückt wird. Im Vergleich zum Einstellvorgang des Getränkebehälters, bei dem sich die Federkräfte auf alle Haltebacken verteilen, wirken sie in diesem Fall gemeinsam auf eine einzige Haltebacke. Gleichzeitig verursacht die Kraft der einzeln ausgelenkten Haltebacke auf das Koppelelement, das dieses - wenn auch nur leicht - verkippt. Dieser Effekt tritt auch bei jeder noch so engen Führung auf und ist hier durchaus erwünscht. Durch dieses leichte Verkippen, wird die nicht-symmetrischen Belastung zum Verkanten des Koppelelements innerhalb seiner Lagerung führen. Damit wird die Bewegung des Koppelelements und der entsprechenden Haltebacke blockiert, wodurch eine hervorragende Haltewirkung erreicht wird. Dieser zweite Wirkmechanismus tritt auch dann auf, wenn die einzelnen Federelemente nicht auf das Koppelelement sondern jeweils direkt auf eine Haltebacke wirken. Vorzugsweise sind die Federelemente der Federung jedoch am Koppelelement selbst angeordnet, so dass beide Wirkmechanismen zum Tragen kommen können.

In einer bevorzugten Ausführungsform ist das Koppelelement ein Ring, wodurch ein einfacher konstruktiver Aufbau möglich wird. Ohne den Erfindungsgedanken zu verlassen, könnte das Koppelelement aber auch scheibenförmig und unterhalb der Behälteraufnahme angeordnet sein, wobei die Haltebacken über zusätzliche Hebel, Stößel oder dgl. auf das Koppelelement wirken.

Zur Lagerung des Koppelelements werden vorzugsweise mehrere, über den Umfang verteilte Linearführungen verwendet. Dies erlaubt eine einfache konstruktive Ausführung. Für den Fall eines scheibenförmigen Koppelelements ist aber auch eine mittig angeordnete teleskopartige Lagerung denkbar.

Die Erfindung wird nachfolgend anhand eines in der Zeichnung dargestellten Ausführungsbeispiels näher erläutert. Es zeigen:
- Figur 1: den Halter in einer perspektivischen Schnittdarstellungen;
- Figur 2: den Halter ohne Abdeckblende in einer Draufsicht;
- Figur 3: den Halter in einer Schnittdarstellung gemäß der Schnittlinie I - I; und
- Figur 4: den Halter in einer Schnittdarstellung gemäß der Schnittlinie II - II.

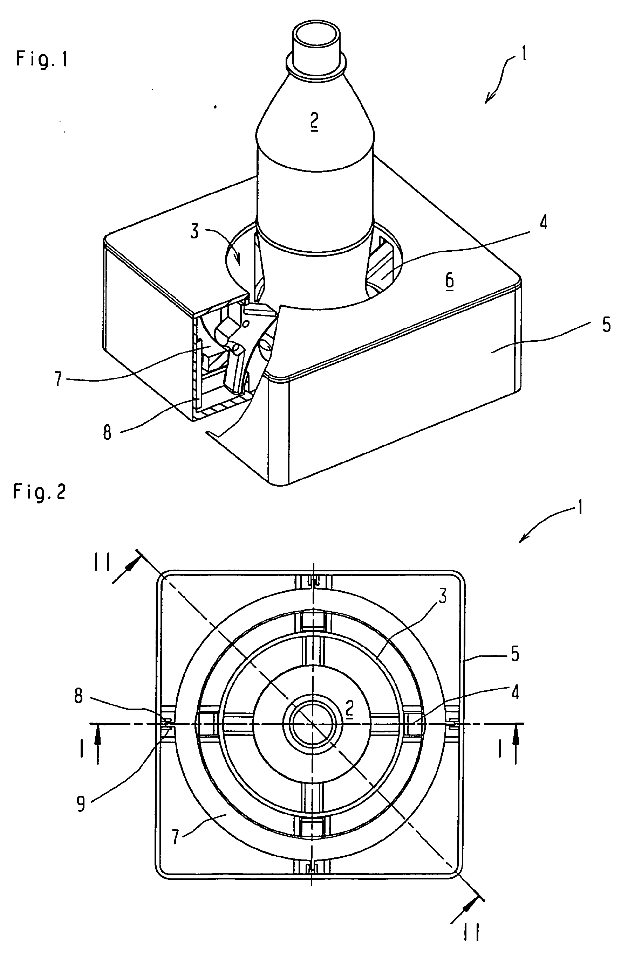

Der in den Figuren 1 bis 4 dargestellte Halter 1 ist zum Einbau in ein Kraftfahrzeug vorgesehen und kann zum Halten von Getränkebehältern, wie der dargestellten Flasche 2, verwendet werden. Als Getränkebehälter kommen daneben auch Tassen, Becher, Getränkedosen, oder dgl. in Frage. Der Halter 1 weist eine topfförmige Behälteraufnahme 3 mit mehreren über den Umfang verteilten Haltebacken 4 sowie ein Gehäuse 5 und eine Abdeckblende 6 auf. Gehäuse 5 und Abdeckblende 6 könnten je nach Einbauort angepasst werden, beispielsweise an die Geometrie einer Mittelkonsole eines Fahrzeugs. Die Haltebacken 4 sind durch ein ringförmiges Koppelelement 7, dass die Behälteraufnahme 3 und die Haltebacken 4 umschließt, gekoppelt. Das Koppelelement ist durch die Linearführungen 8 gelagert.

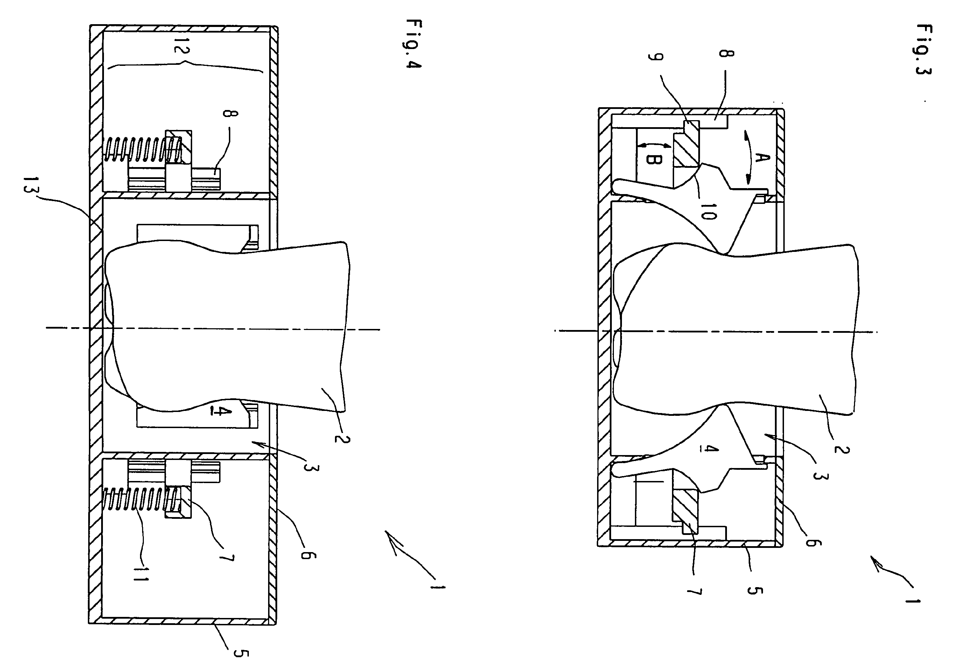

Dies wird aus Figur 2 deutlicher, in der der Halter 1 in einer Draufsicht ohne Abdeckblende 6 dargestellt ist. Die Figur 2 zeigt insbesondere die Flasche 2, die Behälteraufnahme 3, die Haltebacken 4, das Gehäuse 5 und das Koppelelement 7. Dieses ist in vier über den Umfang verteilten Linearführungen 8 gelagert. Es weist hierzu jeweils eine Fahne 9 auf. Innerhalb der Linearführungen 8 haben die Fahnen 9 ein geringes Spiel in Umfangsrichtung. Sollte ein Kippmoment auf das Koppelelement 7 wirken, so wird dieses durch die Linearführungen 8 aufgenommen, wobei es zu einem Verkanten der Fahnen 9 innerhalb der Linearführungen 8 kommen kann.

Figur 3 und 4 zeigen Querschnitte des Halters 1 entlang der in Figur 2 dargestellten Schnittlinien I -I und II - II. Dargestellt sind wiederum die Flasche 2, die Behälteraufnahme 3, die Haltebacken 4, das Gehäuse 5, die Abdeckblende 6 und das Koppelelement 7 mit den Fahnen 9 (nur in Figur 3) sowie die Linearführungen 8. Aus den in Figur 3 dargestellten Steuerkanten 10 an der dem Koppelelement 7 zugewandten Seite der Haltebacken 4 wird deutlich, wie die Radialbewegung A der Haltebacken 4 in eine Hub- bzw. Senkbewegung B des Koppelelements 7 übertragen wird.

Figur 4 zeigt Druckfedern 11, die als Federelemente der Federung des Koppelelements 7 dienen und über dessen Umfang verteilt angeordnet sind. Die Haltebacken 4, das Koppelelement 7, die Linearführungen 8 und die Druckfedern 11 bilden gemeinsam die Klemmeinrichtung 12 des Halters 1. Im entspannten Zustand halten die Druckfedern 11 das Koppelelement 7 nach oben und hierdurch die Haltebacken 4 in das Innere der Behälteraufnahme 3. Wird die Flasche 2 in die Behälteraufnahme 3 eingestellt, so werden zunächst alle vier Haltebacken 4 radial nach außen gedrängt, und hierdurch das Koppelelement 7 ohne zu verkippen nach unten verschoben. Aufgrund der Taillierung der Flasche 3 erfolgt diese Bewegung im Weiteren in umgekehrter Richtung, bis die Flasche 3 auf dem Boden 13 der Behälteraufnahme 3 aufsteht. Beim Herausnehmen der Flasche 3 erfolgen die Bewegungen wiederum in umgekehrter Reihenfolge. Die auf die Flasche wirkenden Kräfte an jeder Haltebacke 4 sind dabei gering, da sich die Federkräfte der Druckfedern 11 in ihrer Wirkung auf alle Haltebacken 4 gleichmäßig verteilen. Sollte auf die Flasche 2 aufgrund einer fahrtbedingten Trägheitswirkung ein Kippmoment entstehen oder eine radial wirkende Kraft auftreten, so wird eine oder maximal zwei der Haltebacken 4 belastet. Eine Radialbewegung A (siehe Figur 3) einzelner Haltebacken 4 würde entweder dazu führen, dass sich das Koppelement mit seinen Fahnen 9 in der Linearführung 8 verkantet und damit die Radialbewegung A blockiert, oder das Koppelelement führt eine lineare Senkbewegung B aus, ohne zu verkippen. In diesem zweiten, unwahrscheinlicheren Fall wirken alle Druckfedern 11 auf eine einzige oder maximal zwei Haltebacken 4. Beide Fälle sorgen dafür, dass ein Verkippen der Flasche 2 ausgeschlossen ist.

## Patentansprüche

1. Halter (1), mit einer topfförmigen Behälteraufnahme (3) für einen Getränkebehälter (2) und einer eine Federung (11) aufweisenden Klemmeinrichtung (12) mit radial wegdrückbaren und in die Behälteraufnahme (3) hineinragenden Haltebacken (4), **dadurch gekennzeichnet, dass** die Haltebacken (4) über ein Koppelelement (7) miteinander gekoppelt sind, wobei das Koppelelement (7) in Einstellrichtung des Getränkebehälters (2) in wenigstens einer Linearführung (8) verschiebbar gelagert ist.

2. Halter nach Anspruch 1, **dadurch gekennzeichnet, dass** die Federung (11) am Koppelelement (7) angeordnet ist.

3. Halter nach Anspruch 1, **dadurch gekennzeichnet, dass** das Koppelelement (7) ein Ring ist.

4. Halter nach Anspruch **1, dadurch gekennzeichnet, dass** das Koppelelement (7) über den Umfang verteilte Fahnen (9) aufweist und mit diesen in Linearführungen (8) gelagert ist.
